# EUROPEAN PATENT APPLICATION

(11) **EP 4 521 564 A1**
(43) Date of publication of application: **12.03.2025**
(21) Application number: 23814659.1
(22) Date of filing: 21.02.2023
(51) Int. Cl.: H01R 13/629, H01R 13/64, H01R 13/02

(54) **CHARGING TERMINAL AND CHARGING BASE**

(30) Priority: 31.05.2022 CN 202221338538 U
(71) Applicant: BYD Company Limited, Shenzhen, Guangdong 518118 (CN)
(72) Inventor: YANG, Cheng, Shenzhen, Guangdong 518118 (CN); ZHANG, Lufeng, Shenzhen, Guangdong 518118 (CN); LIU, Zhigang, Shenzhen, Guangdong 518118 (CN)
(74) Representative: Taor, Simon Edward William
(86) International application number: PCT/CN2023/077358
(87) International publication number: WO 2023/231460

(57) **Abstract**

A charging terminal and a charging base. The charging terminal comprises a connecting base and an inserting part. The charging terminal is arranged inside the charging base. The connecting base is connected to a cable of the charging base. The inserting part comprises an insertion hole and a plurality of elastic pieces arranged at intervals in the circumferential direction. The plurality of elastic pieces are enclosed to form the insertion hole. The insertion hole is connected to a pin terminal of a charging gun. The elastic pieces comprise a main elastic piece and a transition elastic piece arranged on the end portion of the main elastic piece. The transition elastic piece is connected between the main elastic piece and the connecting base. The outer peripheral surface of the transition elastic piece is a recessed surface. When the pin terminal of the charging gun is inserted into the insertion hole, the transition elastic piece is used for pulling the main elastic piece to move towards a central axis of the insertion hole.

## Description

### CROSS-REFERENCE TO RELATED APPLICATIONS

The present disclosure claims priority to Chinese Patent Application No. 202221338538.X, filed on May 31, 2022 and entitled "CHARGING TERMINAL AND CHARGING BASE". The entire content of the above-referenced application is incorporated herein by reference.

### FIELD

The present disclosure relates to the technical field of charging bases, and more specifically, to a charging terminal and a charging base.

### BACKGROUND

A charging base is mounted to a new energy vehicle. When an existing charging base is connected to a power supply end for charging, a head of a charging gun of the power supply end needs to be inserted into a charging interface of the charging base of the new energy vehicle.

However, when an existing charging gun is inserted into a charging base, it cannot be determined whether the charging gun is in proper contact. Insufficient contact causes a small contact area of the conductors, resulting in a significant increase in a local heat generation amount of the conductors. In addition, during charging, hot plugging may be performed for the charging gun, affecting user safety.

### SUMMARY

According to an aspect, an embodiment of the present disclosure provides a charging terminal. The charging terminal includes a connecting base and an insertion portion. The charging terminal is arranged inside the charging base. The connecting base is configured to connect to a cable of the charging base. The insertion portion includes multiple elastic pieces arranged at intervals along a circumferential direction of the charging terminal. An insertion hole configured to allow insertion of the pin terminal of a charging gun is formed on inner sides of the multiple elastic pieces.

Each of the elastic pieces includes a main elastic piece and an elastic transition piece. The elastic transition piece is connected between the main elastic piece and the connecting base. A concave surface recessed toward an axis of the insertion hole is arranged on an outer peripheral surface of the elastic transition piece.

When the pin terminal of the charging gun is inserted into the insertion hole, the multiple elastic pieces expand outward. The elastic transition piece is configured to retract the main elastic piece, to cause multiple main elastic pieces to tend to converge toward a central shaft is of the insertion hole, to cause the multiple main elastic pieces to be tightly attached to an outer peripheral surface of the pin terminal of the charging gun.

Optionally, the concave surface extends along a circumferential direction of the charging terminal. concave surfaces of multiple elastic transition pieces are on a same circumference. The concave surfaces of the multiple elastic transition pieces form an annular structure.

Optionally, the multiple elastic pieces are arranged at intervals. A slit is formed between two adjacent elastic pieces.

Optionally, a section size of the connecting base is greater than a section size of the main elastic piece. A first end of the elastic transition piece is connected with the connecting base. A second end of the elastic transition piece is connected with the main elastic piece. A section size of the first end of the elastic transition piece is greater than a section size of the second end of the elastic transition piece.

Optionally, the main elastic piece includes a first connecting section, a second connecting section and a third connecting section. An end of the first connecting section is connected with the elastic transition piece. The second connecting section is connected between an other end of the first connecting section and the third connecting section. Along a radial direction of the insertion hole, a thickness of the second connecting section is less than a thickness of the first connecting section and a thickness of the third connecting section.

Optionally, a length of the first connecting section is greater than a length of the second connecting section. The length of the second connecting section is greater than a length of the third connecting section.

Optionally, an inclined guide surface is arranged on the third connecting section. The inclined guide surface is inclined from an inner side surface of the third connecting section toward an outer side surface.

Optionally, the connecting base includes a connecting base body and a connecting hole provided inside the connecting base body. The connecting hole is configured to connect to the cable of the charging base.

Optionally, a conductive layer is arranged on an inner wall of the connecting hole.

Optionally, the conductive layer is a tin layer.

Optionally, the connecting base further includes an annular groove provided on the connecting base body. The annular groove is configured to be engaged with the charging base.

Optionally, an end of the insertion hole is open. An other end is enclosed. The open end of the insertion hole is configured to allow insertion of the pin terminal. The enclosed end of the insertion hole extends to the connecting base body.

According to another aspect, an embodiment of the present disclosure provides a charging terminal. The charging terminal includes a connecting base and an insertion portion. The insertion portion includes multiple elastic pieces arranged at intervals along a circumferential direction of the charging terminal. An insertion hole is formed on inner sides of the multiple elastic pieces.

Each of the elastic pieces includes a main elastic piece and an elastic transition piece. The elastic transition piece is connected between the main elastic piece and the connecting base. A concave surface recessed toward an axis of the insertion hole is arranged on an outer peripheral surface of the elastic transition piece.

Optionally, the concave surface extends along a circumferential direction of the charging terminal. concave surfaces of multiple elastic transition pieces are on a same circumference. The concave surfaces of the multiple elastic transition pieces form an annular structure.

Optionally, a section size of the connecting base is greater than a section size of the main elastic piece. A first end of the elastic transition piece is connected with the connecting base. A second end of the elastic transition piece is connected with the main elastic piece. A section size of the first end of the elastic transition piece is greater than a section size of the second end of the elastic transition piece.

Optionally, the main elastic piece includes a first connecting section, a second connecting section and a third connecting section. An end of the first connecting section is connected with the elastic transition piece. The second connecting section is connected between an other end of the first connecting section and the third connecting section. Along a radial direction of the insertion hole, a thickness of the second connecting section is less than a thickness of the first connecting section and a thickness of the third connecting section.

Optionally, an inclined guide surface is arranged on the third connecting section. The inclined guide surface is inclined from an inner side surface of the third connecting section toward an outer side surface.

Optionally, the connecting base includes a connecting base body and a connecting hole provided inside the connecting base body.

According to another aspect, an embodiment of the present disclosure provides a charging base. The charging base includes a charging base housing and the above charging terminal.

Optionally, a cavity for accommodating the charging terminal is provided in the charging base housing. A gap exists between an inner wall of the cavity and the charging terminal.

### BRIEF DESCRIPTION OF THE DRAWINGS

FIG. 1 is a schematic diagram of a charging terminal according to an embodiment of the present disclosure; and
FIG. 2 is a schematic diagram of mating between a charging base and a charging gun according to an embodiment of the present disclosure.

The reference numerals in the specification are as follows:
1. Connecting base; 11. Connecting base body; 12. Connecting hole; 13. Annular groove; 14. Conductive layer; 15. Gap
2. Insertion portion; 21. Insertion hole; 22. Elastic piece; 221. Elastic transition piece; 222. First connecting section; 223. Second connecting section; 224. Third connecting section; 2241. Inclined guide surface; 23. Slit; 225. concave surface;
3. Pin terminal;
4. Charging base housing; 41. Cavity.

### DETAILED DESCRIPTION

To make the technical problems to be resolved in the present disclosure, technical solutions, and beneficial effects of the present disclosure clearer, the present disclosure is further described in detail below with reference to drawings and embodiments. It should be understood that the specific embodiments described herein are merely used for explaining the present disclosure, but are not intended to limit the present disclosure.

A technical problem to be resolved in the present disclosure is as follows: For a problem that it cannot be determined whether an existing charging gun is in proper contact with a charging base when the charging gun is inserted into a charging base, a charging terminal and a charging base are provided.

In the charging terminal provided in the embodiments of the present disclosure, an elastic transition piece is arranged on an end of an elastic piece. The elastic transition piece is in a shape of a concave surface. When a pin terminal is inserted into an insertion hole, and the elastic piece is expanded to exhibit a slight deformation, the elastic transition piece has a retracting effect on a main elastic piece. In this way, multiple elastic pieces converge toward a central shaft of the insertion hole, which can enhance elasticity and rebound forces of the elastic pieces, and the multiple elastic pieces can clamp the pin terminal, to form a clamping structure, ensure that the charging gun is in proper contact, and avoid local heating as a result of insufficient contact.

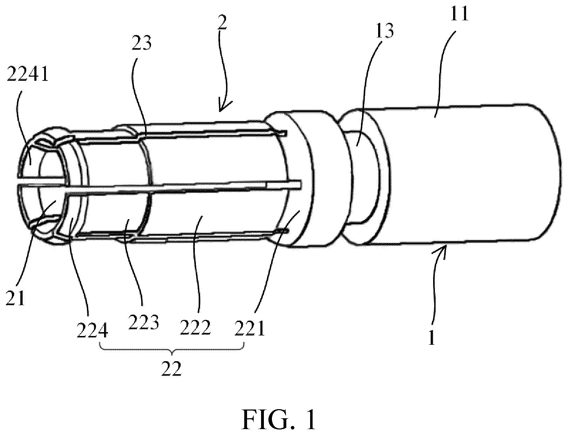

As shown in FIG. 1 to FIG. 2, according to an aspect, an embodiment of the present disclosure provides a charging terminal. The charging terminal includes a connecting base 1 and an insertion portion 2. The charging terminal is arranged inside the charging base. The connecting base 1 is configured to connect to a cable of the charging base. The connecting base 1 and the cable are connected with each other inside the charging base. The insertion portion 2 includes multiple elastic pieces 22 arranged at intervals along a circumferential direction of the charging terminal. An insertion hole 21 configured to allow insertion of a pin terminal 3 of a charging gun is formed on inner sides of the multiple elastic pieces 22. When the charging gun is inserted into and mates with the charging base, the pin terminal 3 is inserted into the insertion hole 21, to charge a new energy vehicle.

Each of the elastic pieces 22 includes a main elastic piece and an elastic transition piece 221. The elastic transition piece 221 is connected between the main elastic piece and the connecting base 1. In an axial direction of the charging terminal, a right end part of the main elastic piece is connected with a left end part of the elastic transition piece 221, and a right end part of the elastic transition piece 221 is connected with a left end part of the connecting base 1. Left and right are distinguished based on a left/right direction in FIG. 1. A concave surface 225 recessed toward an axis of the insertion hole 21 is arranged on an outer peripheral surface of the elastic transition piece 221. The concave surface 225 is connected between an outer peripheral surface of the main elastic piece and an outer peripheral surface of the connecting base 1, to form a transition connecting between the main elastic piece and the connecting base 1. When the pin terminal 3 of the charging gun is inserted into the insertion hole 21, the multiple elastic pieces 22 expand outward. Multiple elastic pieces 22 around the insertion hole 21 are expanded as a result of the insertion of the pin terminal 3, and therefore the elastic pieces 22 are deformed. The outer peripheral surface of the elastic transition piece 221 is designed in a shape of a concave surface. The elastic transition piece 221 can retract the main elastic piece, to cause multiple main elastic pieces to tend to converge toward a central shaft of the insertion hole 21, to cause the multiple main elastic pieces to be tightly attached to an outer peripheral surface of the pin terminal 3 of the charging gun.

In the charging terminal provided in the embodiments of the present disclosure, the elastic transition piece 221 is arranged on an end of the elastic piece 22. The elastic transition piece 221 is in the shape of the concave surface. When the pin terminal 3 is inserted into the insertion hole 21, and the elastic piece 22 is expanded to exhibit a slight deformation, the elastic transition piece 221 has the retracting effect on the main elastic piece. In this way, the multiple elastic pieces 22 converge toward the central shaft, which can enhance elasticity and rebound forces of the elastic pieces 22, and the multiple elastic pieces 22 can clamp the pin terminal 3, to form a clamping structure, ensure that the charging gun is in proper contact, and avoid local heating as a result of insufficient contact.

Furthermore, since the elastic pieces 22 can clamp the pin terminal 3, during the insertion of the pin terminal 3, the charging terminal can scrape off an oxide layer and a foreign object on a surface of the pin terminal 3, so that the pin terminal 3 of the charging gun becomes smooth with use. In this way, a problem of heating up of the pin terminal 3 of the charging gun as a result of an increased resistance after oxidation is resolved.

In an embodiment, as shown in FIG. 1, the multiple elastic pieces 22 are arranged at intervals, and a slit 23 is formed between two adjacent elastic pieces 22. In this way, the insertion portion 2 can tightly clamp the pin terminal 3. In addition, adaptability can be improved. When a size error of the pin terminal 3 is excessively large, the insertion and mating between the charging base and the charging gun can be achieved.

In an embodiment, 2 to 8 elastic pieces 22 are arranged. Optionally, in this embodiment, 6 elastic pieces 22 are arranged.

In an embodiment, the concave surface 225 extends along the circumferential direction of the charging terminal. Concave surfaces 225 of multiple elastic transition pieces 221 are on a same circumference. Multiple concave surfaces 225 form an annular structure. A sectional shape of the concave surface may include but is not limited to, a V shape, a U shape, and an arc shape. Optionally, the concave surface 225 is a concave curved surface.

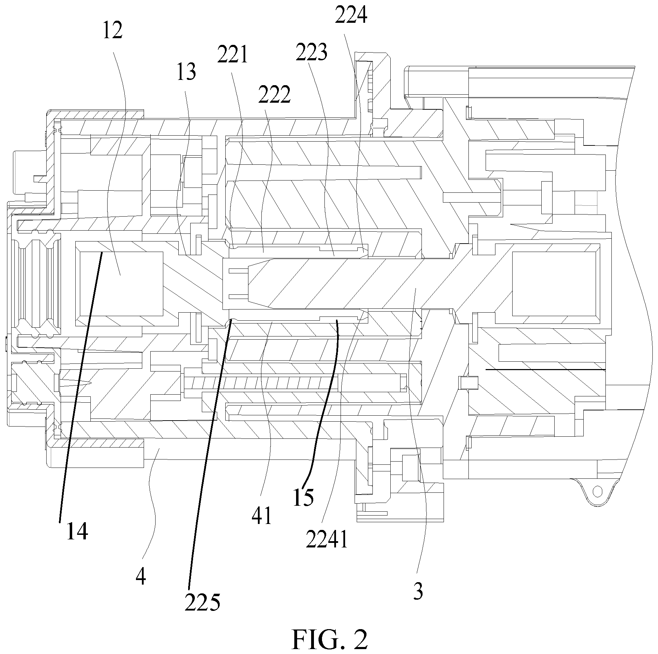

In an embodiment, as shown in FIG. 1 and FIG. 2, a section size of the connecting base 1 is greater than a section size of the main elastic piece. A first end of the elastic transition piece 221 is connected with the connecting base 1. A second end of the elastic transition piece 221 is connected with the main elastic piece. A section size of the first end of the elastic transition piece 221 is greater than a section size of the second end of the elastic transition piece 221. A middle part of the elastic transition piece 221 is recessed toward the central shaft of the insertion hole 21, so that the entire elastic transition piece 221 is in a shape of the concave curved surface. In this way, the elastic piece 22 has a relatively desirable rebound force when being deformed as a result of outward expansion, the elastic piece 22 can recover well after the pin terminal 3 is unplugged, and full contact between the pin terminal 3 and the charging terminal is not affected after next insertion of the pin terminal 3.

In an embodiment, as shown in FIG. 2, an end of the insertion hole 21 is open and an other end is enclosed. The open end of the insertion hole 21 is configured to allow insertion of the pin terminal 3. The enclosed end of the insertion hole 21 extends to a connecting base body 11.

In an embodiment, as shown in FIG. 1 and FIG. 2, the main elastic piece includes a first connecting section 222, a second connecting section 223 and a third connecting section 224. An end of the first connecting section 222 is connected with the elastic transition piece 221. The concave surface 225 is connected with an outer surface of the first connecting section 222. The second connecting section 223 is connected between an other end of the first connecting section 222 and the third connecting section 224. Along a radial direction of the insertion hole 21, a thickness of the second connecting section 223 is less than a thickness of the first connecting section 222 and a thickness of the third connecting section 224. A length of the first connecting section 222 is greater than a length of the second connecting section 223. The length of the second connecting section 223 is greater than a length of the third connecting section 224. The length and the thickness of the first connecting section 222 are slightly larger, which can ensure rigidity of the elastic piece 22, and prevent a situation in which the elastic piece 22 does not easily recover from deformation as a result of insufficient rigidity of the elastic piece 22. The length and the thickness of the second connecting section 223 are slightly small, and the second connecting section is arranged close to the open end of the insertion hole 21, which can ensure elasticity of the elastic piece 22, have a certain degree of deformation, and can tightly clamp the pin terminal 3. Through reasonable distribution of the rigidity and the elasticity of the elastic piece 22, the elastic piece 22 can resist deformation and recover from deformation while clamping tightly the pin terminal 3, such that subsequent insertions of the pin terminal 3 are not affected, and a service life is improved.

In an embodiment, as shown in FIG. 1 and FIG. 2, an inclined guide surface 2241 is arranged on the third connecting section 224. Along a radial direction of the charging terminal, the inclined guide surface 2241 is inclined from an inner surface of the third connecting section 224 toward the outer surface, so that the open end of the insertion hole 21 is in a shape of a trumpet away from the insertion hole 21, which facilitates the insertion of the pin terminal 3. The inclined guide surface 2241 has a guiding effect during the insertion of the pin terminal 3, to guide an insertion direction of the pin terminal 3.

In an embodiment, as shown in FIG. 1 and FIG. 2, the connecting base 1 includes the connecting base body 11 and a connecting hole 12 provided inside the connecting base body 11. The connecting hole 12 is configured to connect to the cable of the charging base. A shape and a size of the connecting hole 12 may be determined based on an actual case. The size of the connecting hole 12 can have specific impact on a current carrying capacity of the charging terminal.

In an embodiment, a conductive layer 14 is arranged on an inner wall of the connecting hole 12. Through arrangement of the conductive layer 14, the current carrying capacity of the charging terminal can be enhanced, and the current carrying capacity can be increased to 320 A. Through the increase of the current carrying capacity of the charging terminal, a temperature change curve of the charging gun during charging is optimized, to prevent a high temperature from generating an adverse effect on a head of the charging gun. Optionally, the conductive layer 14 is a tin layer.

In an embodiment, as shown in FIG. 1, the connecting base 1 further includes an annular groove 13 provided on the connecting base body 11. The annular groove 13 is engaged with the charging base, which can prevent the charging terminal from moving along the axial direction.

According to an aspect, an embodiment of the present disclosure provides a charging base. The charging base includes a charging base housing 4 and the above charging terminal. The charging terminal is arranged in the charging base housing 4. Multiple types of terminals are arranged on the charging base. Each terminal may adopt a structure the same as the charging terminal.

In an embodiment, as shown in FIG. 2, a cavity 41 for accommodating the charging terminal is provided in the charging base housing 4. A gap 15 exists between an inner wall of the cavity 41 and the charging terminal, so that the charging terminal is not tightly clamped in the cavity 41. When an insertion position of the pin terminal 3 is not on a centerline of the cavity 41, the charging terminal slightly moves following the position of the pin terminal 3, to reduce damage to the charging terminal.

The above descriptions are merely exemplary embodiments of the present disclosure, but are not intended to limit the present disclosure. Any modification, equivalent replacement, improvement, and the like made within the spirit and principle of the present disclosure shall fall within the protection scope of the present disclosure.

## Claims

1. A charging terminal, comprising a connecting base (1) and an insertion portion (2), the charging terminal being arranged inside a charging base, the connecting base (1) being configured to connect to a cable of the charging base, the insertion portion (2) comprising a plurality of elastic pieces (22) arranged at intervals along a circumferential direction of the charging terminal, and an insertion hole (21) configured to allow insertion of a pin terminal (3) of a charging gun being formed on inner sides of the plurality of elastic pieces (22);
each of the elastic pieces (22) comprising a main elastic piece and an elastic transition piece (221), the elastic transition piece (221) being connected between the main elastic piece and the connecting base (1), and a concave surface (225) recessed toward an axis of the insertion hole (21) being arranged on an outer peripheral surface of the elastic transition piece (221); and
when the pin terminal (3) of the charging gun is inserted into the insertion hole (21), the plurality of elastic pieces (22) expanding outward, and the elastic transition piece (221) being configured to retract the main elastic piece, to cause a plurality of main elastic pieces to tend to converge toward a central shaft of the insertion hole (21), to cause the plurality of main elastic pieces to be tightly attached to an outer peripheral surface of the pin terminal (3) of the charging gun.

2. The charging terminal according to claim 1, wherein the concave surface (225) extends along a circumferential direction of the charging terminal; concave surfaces (225) of a plurality of elastic transition pieces (221) are on a same circumference; and the concave surfaces (225) of the plurality of elastic transition pieces (221) form an annular structure.

3. The charging terminal according to claim 1 or 2, wherein the plurality of elastic pieces are arranged at intervals; and a slit (23) is formed between two adjacent elastic pieces.

4. The charging terminal according to any of claims 1 to 3, wherein a section size of the connecting base (1) is greater than a section size of the main elastic piece; a first end of the elastic transition piece (221) is connected with the connecting base (1); a second end of the elastic transition piece (221) is connected with the main elastic piece; and a section size of the first end of the elastic transition piece (221) is greater than a section size of the second end of the elastic transition piece (221).

5. The charging terminal according to any of claims 1 to 4, wherein the main elastic piece comprises a first connecting section (222), a second connecting section (223), and a third connecting section (224); an end of the first connecting section (222) is connected with the elastic transition piece (221); the second connecting section (223) is connected between an other end of the first connecting section (222) and the third connecting section (224); and along a radial direction of the insertion hole (21), a thickness of the second connecting section (223) is less than a thickness of the first connecting section (222) and a thickness of the third connecting section (224).

6. The charging terminal according to claim 5, wherein a length of the first connecting section (222) is greater than a length of the second connecting section (223); and the length of the second connecting section (223) is greater than a length of the third connecting section (224).

7. The charging terminal according to claim 5 or 6, wherein an inclined guide surface (2241) is arranged on the third connecting section (224); and the inclined guide surface (2241) is inclined from an inner side surface of the third connecting section (224) toward an outer side surface.

8. The charging terminal according to any of claims 1 to 7, wherein the connecting base (1) comprises a connecting base body (11) and a connecting hole (12) provided inside the connecting base body; and the connecting hole (12) is configured to connect to the cable of the charging base.

9. The charging terminal according to claim 8, wherein a conductive layer (14) is arranged on an inner wall of the connecting hole (12).

10. The charging terminal according to claim 9, wherein the conductive layer (14) is a tin layer.

11. The charging terminal according to any of claims 8 to 10, wherein the connecting base (1) further comprises an annular groove (13) provided on the connecting base body (11); and the annular groove (13) is configured to be engaged with the charging base.

12. The charging terminal according to any of claims 1 to 11, wherein an end of the insertion hole (21) is open an other end is enclosed; the open end of the insertion hole (21) is configured to allow insertion of the pin terminal (3); and the enclosed end of the insertion hole (21) extends to the connecting base body (11).

13. A charging terminal, comprising a connecting base (1) and an insertion portion (2), the insertion portion (2) comprising a plurality of elastic pieces (22) arranged at intervals along a circumferential direction of the charging terminal, and an insertion hole (21) being formed on inner sides of the plurality of elastic pieces (22); and
each of the elastic pieces (22) comprising a main elastic piece and an elastic transition piece (221), the elastic transition piece (221) being connected between the main elastic piece and the connecting base (1), and a concave surface (225) recessed toward an axis of the insertion hole (21) being arranged on an outer peripheral surface of the elastic transition piece (221).

14. The charging terminal according to claim 13, wherein the concave surface (225) extends along a circumferential direction of the charging terminal; concave surfaces (225) of a plurality of elastic transition pieces (221) are on a same circumference; and the concave surfaces (225) of the plurality of elastic transition pieces (221) form an annular structure.

15. The charging terminal according to claim 13 or 14, wherein a section size of the connecting base (1) is greater than a section size of the main elastic piece; a first end of the elastic transition piece (221) is connected with the connecting base (1); a second end of the elastic transition piece (221) is connected with the main elastic piece; and a section size of the first end of the elastic transition piece (221) is greater than a section size of the second end of the elastic transition piece (221).

16. The charging terminal according to any of claims 13 to 15, wherein the main elastic piece comprises a first connecting section (222), a second connecting section (223), and a third connecting section (224); an end of the first connecting section (222) is connected with the elastic transition piece (221); the second connecting section (223) is connected between an other end of the first connecting section (222) and the third connecting section (224); and along a radial direction of the insertion hole (21), a thickness of the second connecting section (223) is less than a thickness of the first connecting section (222) and a thickness of the third connecting section (224).

17. The charging terminal according to claim 16, wherein an inclined guide surface (2241) is arranged on the third connecting section (224); and the inclined guide surface (2241) is inclined from an inner side surface of the third connecting section (224) toward an outer side surface.

18. The charging terminal according to any of claims 13 to 17, wherein the connecting base (1) comprises a connecting base body (11) and a connecting hole (12) provided inside the connecting base body.

19. A charging base, comprising a charging base housing (4) and the charging terminal according to any of claims 1 to 12 or the charging terminal according to any of claims 13 to 18.

20. The charging base according to claim 19, wherein a cavity (41) for accommodating the charging terminal is provided in the charging base housing; and a gap (15) exists between an inner wall of the cavity and the charging terminal.
